# EUROPÄISCHE PATENTANMELDUNG

(11) **EP 3 552 941 A1**
(43) Veröffentlichungstag der Anmeldung: **16.10.2019**
(21) Anmeldenummer: 19167607.1
(22) Anmeldetag: 05.04.2019
(51) Int. Cl.: B62K 25/00, G10L 15/00, B62J 99/00, B62K 3/00, B62K 25/04

(54) **FAHRRAD, FAHRRADBAUGRUPPE UND VERFAHREN**

(30) Priorität: 11.04.2018 DE 102018108589
(71) Anmelder: DT Swiss AG, 2504 Biel (CH)
(72) Erfinder: Böckmann, Frank, CH-2504 Biel (CH)
(74) Vertreter: BSB Patentanwälte Schütte & Engelen Partnerschaft mbB

(57) **Zusammenfassung**

Fahrrad und Verfahren und Fahrradbaugruppe (10) für ein Fahrrad (200) mit einer Steuereinrichtung (60) und wenigstens einer Fahrradkomponente (20), deren Betriebszustand im Betrieb veränderlich ist. Es ist eine Akustikeinrichtung (30) mit einem Schallwandler (31, 32) umfasst, um über die Steuereinrichtung (60) gesteuert Informationen über den Betriebszustand der Fahrradkomponente (20) mittels der Akustikeinrichtung (30) auszugeben und/oder um mit der Akustikeinrichtung (30) Geräusche zu erfassen und in Geräuschsignale umzuwandeln und zur Steuerung zu verwenden.

## Beschreibung

Die vorliegende Erfindung betrifft eine Fahrradbaugruppe für ein wenigstens teilweise muskelbetriebenes Fahrrad und insbesondere Mountainbike, Rennrad oder Straßenrad mit einer Steuereinrichtung und wenigstens einer Fahrradkomponente, deren Betriebszustand im Betrieb veränderlich oder veränderbar ist, sowie ein Verfahren zum Betreiben.

Im Stand der Technik sind verschiedenste Fahrräder und Fahrradbaugruppen mit einer oder mehreren Fahrradkomponenten bekannt geworden, bei denen der Betriebszustand wenigstens einer Fahrradkomponente im Betrieb veränderlich ist und die weiterhin eine Steuereinrichtung, wie beispielsweise einen Fahrradcomputer, umfassen.

Bei vielen derartigen Fahrradbaugruppen und Fahrrädern ist der Betriebszustand wenigstens einer Fahrradkomponente im Betrieb aktiv veränderbar. Beispielsweise weisen Fahrräder meist eine Gangschaltung auf, deren Übersetzungsverhältnis aktiv durch den Benutzer veränderbar ist. Mountainbikes weisen regelmäßig wenigstens eine Dämpfereinrichtung auf. Viele Mountainbikes umfassen eine Federgabel zur Federung und Dämpfung des Vorderrades und einen Hinterraddämpfer, um Stöße an dem Hinterrad zu dämpfen. Die meisten Dämpfer für ein Vorderrad oder ein Hinterrad weisen Einstellelemente auf, mit denen vor oder sogar während der Fahrt Einstellungen verändert werden können. Dabei sind manche Fahrradkomponenten direkt elektrisch beeinflussbar oder sind über einen Bowdenzug manuell oder auch elektrisch betätigbar. Bei manchen Fahrradkomponenten können die Einstellungen per Hand geändert werden.

Eine Schwierigkeit bei dem Betrieb von Fahrrädern, Fahrradbaugruppen und Fahrradkomponenten ist es für den Fahrer, den Überblick zu behalten, welche Einstellungen an welchen Komponenten gerade aktiv sind. Eine weitere Schwierigkeit besteht darin, die Einstellungen der unterschiedlichen Komponenten während der Fahrt zu ändern. Fährt der Fahrer beispielsweise mit einem Mountainbike steil bergab durch ein relativ unwegsames Gelände, so ist es für ihn schwierig, wenn nicht sogar unmöglich, die Einstellungen der unterschiedlichen Komponenten während der Fahrt abzulesen oder zu ändern. Er muss sich auf sein Gefühl oder sein Gedächtnis verlassen. Zwar gibt es Anzeigen für die Gangschaltung am Lenker, aber die Anzeige ist klein und der Fahrer kann während einer entsprechenden Bergabfahrt die Anzeige nicht immer ablesen, da er seinen Blick auf der Strecke lassen muss und sich nicht so lange auf eine kleine Anzeige an dem Lenker konzentrieren kann, bis er die Information abgerufen und verstanden hat.

Es ist deshalb die Aufgabe der vorliegenden Erfindung eine Fahrradbaugruppe, ein Fahrrad und ein Verfahren zur Verfügung zu stellen, womit es dem Benutzer erlaubt wird, einen besseren Überblick über die Einstellungen zu behalten und/oder die Einstellungen während oder vor der Fahrt einfacher zu ändern.

Diese Aufgabe wird gelöst durch eine Fahrradbaugruppe mit den Merkmalen des Anspruchs 1, durch ein Fahrrad mit den Merkmalen des Anspruchs 20 und durch ein Verfahren mit den Merkmalen des Anspruchs 21. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrradbaugruppe für ein wenigstens teilweise muskelbetriebenes Fahrrad umfasst eine Steuereinrichtung und wenigstens eine Fahrradkomponente, deren Betriebszustand im Betrieb veränderlich und insbesondere veränderbar ist. Die Fahrradbaugruppe umfasst wenigstens eine Akustikeinrichtung mit insbesondere wenigstens einem Schallwandler, um über die Steuereinrichtung gesteuert Informationen über den Betriebszustand der Fahrradkomponente mittels der Akustikeinrichtung auszugeben und/oder um mit der oder einer weiteren Akustikeinrichtung Geräusche zu erfassen und in Geräuschsignale umzuwandeln und zur Steuerung zu verwenden.

Die Geräuschsignale werden insbesondere an die Steuereinrichtung übermittelt. Die wenigstens eine Akustikeinrichtung umfasst vorzugsweise wenigstens einen Schallwandler. Insbesondere sind wenigstens ein Schallwandler als Ausgabeeinrichtung und wenigstens ein Schallwandler als Aufnahmeeinrichtung vorgesehen. Die Aufnahmeeinrichtung bzw. ein Schallwandler kann als Mikrofon ausgebildet sein. Die Ausgabeeinrichtung bzw. ein Schallwandler kann als Lautsprecher ausgebildet sein. Bei den Geräuschsignalen handelt es sich insbesondere um elektrische und/oder elektromagnetische Signale. Die Signale können analog sein und sind insbesondere digital bzw. digitalisiert.

Vorzugsweise umfasst die Steuereinrichtung wenigstens einen Prozessor. Die Steuereinrichtung der Fahrradbaugruppe ist insbesondere dazu ausgebildet und eingerichtet, Geräuschsignale in Steuerbefehle umzuwandeln. Die Steuereinrichtung der Fahrradbaugruppe ist insbesondere dazu ausgebildet und eingerichtet, einen Steuerbefehl auszuführen, wenn eine Betätigungseinrichtung in einem zugeordneten Zeitfenster betätigt wird und einen Steuerbefehl ohne Bestätigung durch eine Betätigungseinrichtung (vorzugsweise genau nur dann) auszuführen, wenn der Steuerbefehl nur zur Ausgabe von Informationen dient.

Es ist bevorzugt, dass die Steuereinrichtung dazu ausgebildet und eingerichtet ist, einen aus einem Geräuschsignal oder mehreren Geräuschsignalen umgewandelten Steuerbefehl grundsätzlich nur auszuführen, wenn eine Betätigungseinrichtung in einem zugeordneten Zeitfenster betätigt wird und einen aus einem (oder mehreren) Geräuschsignal umgewandelten Steuerbefehl ohne Bestätigung durch eine Betätigungseinrichtung nur genau dann auszuführen, wenn der Steuerbefehl nur zur Ausgabe von Informationen dient (oder unkritisch für die Sicherheit ist).

Insbesondere bedeutet das, dass die Steuereinrichtung der Fahrradbaugruppe oder eines Fahrrads dazu ausgebildet und eingerichtet ist, ein mit der Akustikeinrichtung erfasstes Geräuschsignal in einen Steuerbefehl umzuwandeln und auszuführen, wenn eine Betätigungseinrichtung in einem zugeordneten Zeitfenster betätigt wird und ein mit der Akustikeinrichtung erfasstes Geräuschsignal in einen Steuerbefehl umzuwandeln und ohne Bestätigung durch eine Betätigungseinrichtung (vorzugsweise genau nur dann) auszuführen, wenn das mit der Akustikeinrichtung erfasste und in einen Steuerbefehl umgewandelte Geräuschsignal nur zur Ausgabe von Informationen dient.

Ein mit der Akustikeinrichtung erfasstes Geräuschsignal, das in einen Steuerbefehl umgewandelt wird, kann auch als akustischer Steuerbefehl bezeichnet werden. Der Sprachbefehl, der in einen Steuerbefehl umgewandelt wird, kann auch als sprachlicher Steuerbefehl bezeichnet werden.

Eine erfindungsgemäße Fahrradbaugruppe hat viele Vorteile. Ein erheblicher Vorteil der erfindungsgemäßen Fahrradbaugruppe besteht darin, dass über die Akustikeinrichtung Informationen über den Betriebszustand der Fahrradkomponente ausgegeben werden können und/oder dass mittels der Akustikeinrichtung die Fahrradkomponente (aktiv) gesteuert werden kann. Das erlaubt eine einfache Bedienung auch im Betrieb.

Unter einem Schallwandler im Sinne der vorliegenden Erfindung wird jegliche Einrichtung oder jegliches Gerät verstanden, welches akustische Signale in elektrische und/oder digitale Signale umwandelt oder umgekehrt. Schallwandler im Sinne der vorliegenden Erfindung sind Schallempfänger und Schallsender bzw. Schallerzeuger. Vorzugsweise wandelt ein Schallwandler akustische Signale in wenigstens eine elektrische Größe (Spannung, Strom) oder eine elektrische Größe (Spannung, Strom) in akustische Signale um. Beispiele von Schallwandlern sind insbesondere Mikrofone, akustische Sensoren und sonstige Schallempfänger sowie Schallsender wie Lautsprecher oder sonstige Schallgeber oder auch Vibrationseinrichtungen, die akustisch hörbar Schall ausgeben.

Fährt der Fahrer eines damit ausgerüsteten Fahrrads beispielsweise steil bergab und nähert sich der Senke im Tal, von wo an es wieder bergauf geht, dann kann es für den Fahrer beispielsweise interessant sein, festzustellen, in welchem Gang er gerade fährt. Aufgrund von Unwegsamkeiten wie Wurzeln, Steinen und dergleichen kann dem Fahrer aber die Zeit bzw. Möglichkeit fehlen, die Einstellungen am Lenker oder am Fahrradcomputer oder dergleichen visuell zu überprüfen. Dann kann der Fahrer beispielsweise einen Sprachbefehl oder ein akustisches Signal ausgeben, woraufhin über die Akustikeinrichtung die aktuellen Statusinformationen zur Gangschaltung ausgegeben werden.

Insbesondere umfasst eine Fahrradbaugruppe eine Steuereinrichtung und wenigstens eine Fahrradkomponente, deren Betriebszustand im Betrieb veränderlich ist und wenigstens eine Akustikeinrichtung mit wenigstens einem Schallwandler, um über die Steuereinrichtung gesteuert Informationen über den Betriebszustand der Fahrradkomponente mittels der Akustikeinrichtung auszugeben.

In einer anderen Ausgestaltung umfasst die Fahrradbaugruppe eine Steuereinrichtung und wenigstens eine Fahrradkomponente, deren Betriebszustand im Betrieb veränderlich ist und wenigstens eine Akustikeinrichtung mit wenigstens einem Schallwandler zur Erfassung von Geräuschen und zur Umwandlung in insbesondere elektrische und/oder digitale Geräuschsignale. Die Geräuschsignale sind an die Steuereinrichtung übermittelbar.

In einer bevorzugten Weiterbildung aller Ausgestaltungen ist wenigstens eine Fahrradkomponente aus einer Gruppe von Fahrradkomponenten umfasst, welche aktive und passive Fahrradkomponenten wie ein Vorderrad, ein Hinterrad, eine Dämpfereinrichtung wie eine Dämpfereinrichtung zur Dämpfung des Vorderrades und eine Dämpfereinrichtung zur Dämpfung des Hinterrades, wenigstens ein Sensor zur Erfassung eines Zustandes einer Dämpfereinrichtung, ein Vorderlicht, ein Rücklicht, eine höhenverstellbare Sattelstütze, eine Gangschaltung, einen elektrischen Antriebsmotor (für ein E-Bike), eine Batterieeinheit (für ein E-Bike), eine Druckmesseinrichtung für einen Luftdruck in dem Vorderrad, eine Druckmesseinrichtung für einen Luftdruck in dem Hinterrad, eine Druckmesseinrichtung für einen Luftdruck und/oder Öldruck, einen Geschwindigkeitssensor, einen Winkelsensor, einen Lagesensor und einen Höhensensor und dergleichen mehr umfasst. Umfasst sein können auch Trittfrequenzsensoren, Pulssensoren und GPS-Sensoren, Leistungssensoren wie z. B. Sensoren zur Erfassung der Tretleistung des Fahrers und/oder andere Sensoren wie z. B. Leistungssensoren zur Messung des Luftwiderstandes oder Luftwiderstandsmesssysteme und dergleichen mehr. Auch wenigstens ein Leistungsmesssystem kann umfasst sein.

Eine Aufforderung und/oder Signalausgabe kann akustisch, optisch und/oder durch Vibration etc. erfolgen.

Möglich und bevorzugt ist es auch, dass eine Aufforderung oder Signalausgabe ausgegeben wird, wenn ein Schwellwert unterschritten und/oder oder überschritten wird. Möglich ist es z. B., dass das Fahrrad oder Zweirad bzw. die Steuereinrichtung den Fahrer auffordert stärker zu treten, sich mehr oder weniger anzustrengen oder z. B. "push harder" ausgibt. Möglich ist es auch, dass der Fahrer darauf hingewiesen wird, dass die Tretfrequenz, Herzfrequenz, Geschwindigkeit, die Steigung oder das Gefälle einen Grenzwert unter- oder überschritten hat.

Es ist beispielsweise sehr vorteilhaft, wenn der Luftdruck in einem Vorderrad und/oder einem Hinterrad während des Betriebs erfasst und überwacht wird. Dann kann bei einem plötzlich oder bei einem schleichend auftretenden Druckverlust der Fahrer gewarnt werden.

Umfasst die Fahrradbaugruppe eine Dämpfereinrichtung für das Vorderrad und/oder das Hinterrad, so können Statusinformationen über die aktuellen Einstellungen der Dämpfereinrichtungen und/oder Betriebszustände ausgegeben werden. Möglich ist es beispielsweise, dass eine Betriebstemperatur der Dämpfereinrichtung bzw. des in der Dämpfereinrichtung verwendeten Öls überwacht und ausgegeben wird. Des Weiteren können die Einstellungen zur Low-Speed-Dämpfung und zur High-Speed-Dämpfung und ein eventuell eingestelltes Lockout ausgegeben werden. Gegebenenfalls ist auch eine Einstellung der Dämpfereinrichtung über Geräusche bzw. akustische Signale möglich.

Bei einer höhenverstellbaren Sattelstütze kann ein motorischer oder mechanischer wie z. B. ein hydraulischer oder pneumatischer Antrieb oder dergleichen aktiviert werden, um eine Höhenverstellung der Sattelstütze zu bewirken. Bei einer Gangschaltung kann die aktuelle Einstellung akustisch ausgegeben werden oder es kann auch eine Umschaltung der Gänge akustisch veranlasst werden.

An einer Fahrradbaugruppe mit einem Vorderlicht und/oder Rücklicht kann das Licht beispielsweise über Sprachbefehle ein- oder ausgeschaltet werden.

Bei einer Fahrradbaugruppe, die an einem Fahrrad mit einem elektrischen Antriebsmotor und einer Batterieeinheit eingesetzt wird, kann beispielsweise der Status der Batterieeinheit und die eingestellte Stufe der Unterstützung durch den elektrischen Antriebsmotor ausgegeben und/oder eingestellt werden.

Möglich ist es auch, dass die Messdaten von Geschwindigkeitssensoren z. B. des Fahrrades, Winkelsensoren, Ortssensoren, Lagesensoren und Höhensensoren ausgegeben werden.

Vorzugsweise umfasst die Fahrradbaugruppe und insbesondere die Steuereinrichtung und/oder eine zugeordnete und besonders bevorzugt lokal angeordnete Recheneinheit wenigstens einen Prozessor, der dazu ausgebildet und eingerichtet ist, Geräuschsignale in Steuersignale und insbesondere Steuerbefehle umzuwandeln.

Die Geräusche bzw. Geräuschsignale werden vorzugsweise lokal in der Steuereinrichtung und/oder einer lokal zugeordneten Recheneinheit umgewandelt. Das bedeutet, dass die Umwandlung der Geräuschsignale in Steuerbefehle oder Steuersignale insbesondere in der Steuereinrichtung oder einem zugeordneten Fahrradcomputer oder innerhalb eines lokal vorhandenen Mobiltelefons oder dergleichen erfolgt. Besonders bevorzugt ist dabei, dass die Verarbeitung der Geräusche und Geräuschsignale lokal direkt an der Fahrradkomponente bzw. Fahrradbaugruppe bzw. an dem Fahrrad erfolgt. Ein wichtiger Vorteil ist, dass eine Netzwerkverbindung beispielsweise zu einem Mobilfunknetz oder zu anderen Netzen nicht nötig ist, um die Geräusche zu verarbeiten. Das ist für einen breiten Anwendungskreis wesentlich, da auf den typischerweise von Radfahrern gefahrenen Touren und Routen insbesondere im Gelände aber auch auf Straßen nicht immer gewährleistet ist, dass Mobilfunk empfangen werden kann. Ein Abbruch einer Verbindung würde aber zu einem Funktionsverlust führen. Gerade Trails und Bergfahrten führen oft in Gegenden, in denen kein ausreichendes oder ausreichend stabiles Mobilfunknetz besteht.

Wenn ein Netzwerk zur Verfügung steht, ist es möglich, dass Updates des Systems, einzelner Schnittstellen, Treiber, Programmteile und/oder Anwendungen runtergeladen und/oder installiert werden. So kann das System einfach gewartet und auf aktuellem Stand gehalten werden. Updates können auch erst nach manueller Bestätigung oder zeitversetzt eingespielt werden. Darüber kann der Fahrer auch zusätzliche Features erhalten, mieten, testen, freischalten und/oder erwerben.

Ein weiterer wesentlicher Aspekt ist, dass eine zentrale Verarbeitung auf einem entfernten Server zu einer ungünstigen Reaktionszeit bzw. einem ungünstigen Zeitverzug führen könnte, da die Signale erst über das Internet zu dem möglicherweise weit entfernten Server geleitet werden und dort anschließend verarbeitet werden müssen. Das würde je nach Anbindungsgeschwindigkeit und Standort zu einer ungünstigen oder unzulässigen Verzögerung bei der Verarbeitung von Sprachbefehlen führen. Das Ergebnis wäre unbrauchbar. Es nützt dem Fahrer beispielsweise die Analyse der Geräusche wenig, wenn er sich über die aktuelle Einstellung der Dämpfereinrichtung(en) oder der Gangschaltung informieren will und die Antwort dazu erst mehrere Sekunden später erhält, weil die Signalverbindung schwach ist und viele Daten übertragen und analysiert werden müssen. Deshalb funktionieren bekannte Systeme wie "Siri" von Apple oder "Alexa" von Amazon im Gelände nicht zuverlässig genug. Bei diesen Systemen werden die Sprachinformationen zu entfernten Servern der Hersteller geleitet und dort analysiert. Das erfordert relativ viel Internetbandbreite und kostet Übertraguns- und Verarbeitungszeit. Da die Bandbreite von mobilen Internetverbindungen im Gelände oder außerhalb von Städten oft recht gering und die Latenz hoch ist, kann schon die Übertragung der Sprachaufzeichnung schon länger dauern, als der Benutzer auf eine Reaktion oder Antwort warten will oder kann.

Der Prozessor (oder die Prozessoren) zur Bearbeitung der Geräuschsignale ist deshalb grundsätzlich lokal vorgesehen. Der Prozessor kann in einer Recheneinrichtung in der Steuereinrichtung und/oder im Fahrradcomputer und/oder einem zugeordneten Mobiltelefon angeordnet sein, sofern sich die entsprechende Recheneinrichtung lokal befindet. Unter dem Begriff "lokal" wird im Sinne der vorliegenden Erfindung eine Entfernung verstanden, die kleiner als 100 m und insbesondere kleiner als 5 m oder vorzugsweise kleiner als 2 m beträgt. Vorzugsweise ist die Recheneinrichtung am Fahrrad montiert oder wird von dem Fahrer getragen.

Die zugeordnete Recheneinheit ist insbesondere über Standardschnittstellen mit der Steuereinrichtung verbunden. Möglich ist eine Verbindung über Kabel oder auch kabellos. Eine geeignete Verbindungsart kann über standardisierte Technologien/Protokolle wie z. B. insbesondere Bluetooth oder ANT+ oder WLAN oder auch andere erfolgen.

Vorzugsweise ist der Prozessor dazu ausgebildet und eingerichtet, wenigstens ein Geräusch bzw. wenigstens eine Geräuschsequenz und insbesondere wenigstens einen Sprachbefehl in einen Steuerbefehl umzuwandeln. Besonders bevorzugt ist die Steuereinrichtung dazu ausgebildet und eingerichtet, wenigstens eine vorbestimmte Anzahl von Sprachbefehlen zu erkennen. Beispielsweise kann eine vorbestimmte Anzahl von 10, 20, 30, 40 oder 50 oder mehr unterschiedlichen Sprachbefehlen vorgesehen sein, die programmierbar und insbesondere auch anlernbar sein können. So kann der Benutzer eine zum Beispiel voreingestellte Anzahl von Sprachbefehlen durch benutzerspezifische weitere Sprachbefehle erweitern. Zur optimalen Erkennung können die Sprachbefehle vorzugsweise trainiert werden. Eine Anzahl zwischen 5 und 50 oder zwischen 5 und 20 Sprachbefehlen ist bevorzugt und ermöglicht eine bessere Erkennungsrate.

Vorzugsweise umfasst der Prozessor wenigstens eine Erkennungsroutine, um den Sprecher eines Sprachbefehls zuverlässig zu erkennen. Insbesondere wird ein Sprachbefehl nur ausgeführt, wenn der Sprecher (nahezu eindeutig) erkannt wurde, vorzugsweise ab einer Wahrscheinlichkeit größer 80% und insbesondere größer 90% oder 95%. Ein Sprachtraining zur Erhöhung der Erkennungsquote kann in unbestimmten oder bestimmten Abständen oder bei Fahrtantritt wiederholt werden. Dadurch wird die Erkennungsqualität verbessert.

Eine Steuereinrichtung oder ein Fahrradcomputer kann mehrere unterschiedliche Benutzerprofile aufweisen. So kann ein Benutzer sein Profil z. B. sprachgesteuert oder manuell aktivieren und anschließend wird eine hohe Erkennungsquote und Zuverlässigkeit erreicht.

Vorzugsweise ist die Steuereinrichtung dazu ausgebildet und eingerichtet, einen Steuerbefehl nur auszuführen, wenn der Sprecher eine ausreichende Berechtigung aufweist. Ein Aspekt dabei ist, dass der entsprechende Sprecher überhaupt erkannt wird. So ist es möglich, unbekannte Sprecher auszuschließen und deren Sprachbefehle direkt zu verwerfen.

Des Weiteren ist es aber auch möglich, dass unterschiedliche Personen unterschiedliche Berechtigungen erhalten. So können bestimmte Personen wie z. B. Anfänger beispielsweise nur einfache Einstellungen ändern, während andere Personen wie z. B. fortgeschrittene Benutzer weitere Berechtigungen erhalten oder sich freischalten lassen können und somit auch speziellere oder fortgeschrittene Funktionen nutzen können.

Möglich ist es auch, dass beispielsweise nur dem Fachservice bestimmte Einstellungen vorbehalten sind, um die Benutzer vor fehlerhaften Einstellungen zu schützen. Für Fachpersonal und entsprechend erfahrene Benutzer oder auch Anfänger können Sprachbefehle für ein grundlegendes Setup vorgesehen sein.

Der Steuerbefehl kann in allen Ausgestaltungen durch bestimmte akustische Tonfolgen ausgelöst werden. Vorzugsweise werden Sprachbefehle als akustische Tonfolgen eingesetzt. Denkbar sind auch andere Töne oder Tonfolgen wie Pfeifen oder Hupen etc., um Ereignisse oder Steuerbefehle auszulösen. Möglich sind auch standardisierte oder (frei definierbare und individuelle) Codewörter.

In bevorzugten Weiterbildungen ist die Steuereinrichtung dazu ausgebildet und eingerichtet, einen Steuerbefehl nur auszuführen, wenn eine mechanische oder andere Betätigungseinrichtung in einem zugeordneten Zeitfenster betätigt wird.

Ein Sprachbefehl wird vorzugsweise nur ausgeführt, wenn die (mechanische) Betätigungseinrichtung in einem Zeitfenster betätigt wird, welches dem Zeitpunkt des Sprachbefehls zugeordnet wird. Beispielsweise kann das Zeitfenster mit dem Start des Sprachbefehls beginnen und eine vorbestimmte Zeitdauer lang sein. Möglich sind beispielsweise Zeiträume von 10, 20, 30, 50, 100, 200 oder 500 oder 1000 oder 2000 ms Länge. Auch noch längere Zeiträume sind für das Zeitfenster möglich. Eine Länge eines Zeitfensters kann auch abhängig von der Art des Steuerbefehls sein. Erfolgt die Bestätigung innerhalb des jeweils gültigen Zeitfensters wird der Steuerbefehl ausgeführt. Die Länge eines Zeitfensters kann auch von dem Benutzer abhängen und individuell eingestellt werden.

Möglich ist es auch, dass ein Sprachbefehl nur innerhalb eines Zeitfensters nach Betätigung einer insbesondere mechanischen Betätigungseinrichtung akzeptiert wird. Dann markiert die Betätigung den Start des Zeitfensters.

In derartigen Ausgestaltungen kann ein kurzes Tippen vorher oder ein Drücken während oder kurz nach der Aktion ausreichen.

Es ist auch möglich, dass für bestimmte Steuerbefehle keine mechanische Bestätigung erforderlich ist, während für andere Steuerbefehle eine Betätigung einer mechanischen Betätigungseinrichtung erforderlich ist. So ist beispielsweise der Befehl zum Einschalten des Lichts nicht für die Sicherheit relevant und könnte auch ohne mechanische Betätigung ausgeführt werden. Das Ausschalten kann abends sicherheitsrelevant sein und erfordert gegebenenfalls eine Bestätigung.

Die Änderung der Einstellung einer Dämpfereinrichtung oder auch das Umschalten der Gangschaltung können für die Sicherheit relevant sein und erfolgen vorzugsweise nur nach insbesondere mechanischer Betätigung oder andersartiger Quittierung.

Eine mechanische oder anderweitige Bestätigung kann beispielsweise sinnvoll sein, wenn der Fahrer zusammen mit mehreren anderen Fahrern fährt, die ebenfalls über eine entsprechende Sprachsteuerung verfügen. In derartigen Fällen ist es wichtig sicherzustellen, dass nur Sprachbefehle des jeweiligen Fahrers ausgeführt werden, während die Sprachbefehle anderer Fahrer vorzugsweise ignoriert werden. In vielen Fällen wird es dazu ausreichen, die Stimmen zu erkennen und eine Ausführung zu verwerfen, wenn die Stimme nicht dem Fahrer zugeordnet werden kann. In manchen Fällen wird es auch ausreichen, den Schallpegel als Unterscheidungskriterium einzusetzen. In Zweifelsfällen kann eine erforderliche Bestätigung für die nötige Sicherheit sorgen.

Möglich und bevorzugt ist es auch, dass während einer Fahrt die Stimmen anderer Fahrer analysiert werden, um so eine noch zielsicherere Unterscheidung der Sprachbefehle des Benutzers von möglichen Sprachbefehlen anderer Fahrer zu erreichen.

In einfachen Ausgestaltungen ist die Betätigungseinrichtung eine mechanische Betätigungseinheit und beispielsweise ein Taster oder ein Schalter. Die (mechanische) Betätigungseinrichtung ist vorzugsweise am Lenker des Fahrrads angeordnet. Über eine Bestätigung von Sprachbefehlen oder die Initiierung eines Zeitfensters zur Akzeptierung von Sprachbefehlen über einen Taster oder Schalter oder dergleichen können die Sicherheit und Zuverlässigkeit erhöht werden.

In bevorzugten Ausgestaltungen ist die Steuereinrichtung dazu ausgebildet und eingerichtet, einen Steuerbefehl auch ohne Betätigung einer mechanischen Betätigungseinrichtung oder dergleichen auszuführen, wenn der Steuerbefehl insbesondere nur zur Ausgabe von Informationen dient.

In allen Ausgestaltungen ist es möglich und bevorzugt, dass die Steuereinrichtung einen erkannten Steuerbefehl über ein Bestätigungssignal quittiert. Ein solches Bestätigungssignal kann optisch oder akustisch oder durch Vibration erfolgen. Vorzugsweise erfolgt eine akustische Ausgabe über beispielsweise einen Piepton. Es ist zusätzlich oder anstelle davon auch eine optische Anzeige in Form beispielsweise eines Blinklichts möglich. Ein solches Bestätigungssignal kann unterschiedlich sein, je nach erfolgter Bestätigung.

Ein Signallicht wie ein Blinklicht könnte auch in eine Brille oder einen Helm integriert sein.

Ein Signal könnte auch über wenigstens eine Rütteleinrichtung oder Vibrationseinrichtung als Vibrationssignal ausgegeben werden. Möglich ist ein Feedback über ein Vibrationselement oder mehrere Vibrationselemente. Wenigstens ein Vibrationselement kann in und/oder an dem Helm, in und/oder an dem Lenker, in und/oder an einem Handschuh oder Schuh oder dergleichen mehr oder an anderen Einrichtungen und Gegenständen angeordnet sein.

Vorzugsweise steuert die Steuereinrichtung mit einem Steuerbefehl eine aktive Fahrradkomponente. Eine aktive Fahrradkomponente verfügt vorzugsweise über wenigstens einen Aktor. Vorzugsweise wird wenigstens eine Dämpfereinrichtung über Sprachbefehle eingestellt. Beispielsweise kann eine Dämpfung weicher oder härter eingestellt werden. Auch die Einstellung eines Lockouts ist über Sprachbefehle möglich. Eine Sattelstange kann über Sprachbefehle ausgefahren und/oder eingefahren werden. Das Licht kann auch über Sprachbefehle eingeschaltet oder ausgeschaltet werden. Ein elektrischer Hilfsmotor eines E-Bike kann über Sprachbefehle zugeschaltet, eingestellt oder abgeschaltet werden. Bei Bergabfahrten kann auch eine Motorbremse aktiviert werden. Möglicherweise kann über Sprachbefehle eine Rekuperation aktiviert werden und eine Bergabfahrt genutzt werden, um die Batterieeinheit wenigstens teilweise wieder aufzuladen. Eine aktive Fahrradkomponente kann auch eine Gangschaltung sein, bei der das Übersetzungsverhältnis aktiv verändert wird.

In allen Ausgestaltungen ist es bevorzugt, dass der Akustikeinrichtung eine Sprachausgabeeinrichtung zugeordnet ist. Insbesondere sind eine Spracheingabe und eine Sprachausgabe über die Akustikeinrichtung oder zwei unterschiedliche Akustikeinrichtungen möglich.

Besonders bevorzugt ist die Steuereinrichtung dazu eingerichtet und ausgebildet, mittels der Akustikeinrichtung Warnhinweise auszugeben, wenn eine Fahrradkomponente wie zum Beispiel eine Dämpfereinrichtung oder eine Bremse oder eine Bremsflanke eine vorbestimmte Temperatur übersteigt oder wenn der Luftdruck in einem Reifen sich ändert oder wenn beispielsweise ein Durchschlag einer Dämpfereinrichtung erfolgt ist oder droht. Ein solcher Warnhinweis kann beispielsweise bei einer Dämpfereinrichtung ausgegeben werden, wenn der Federweg bzw. der Dämpfungsweg zu mehr als 90 % oder 95 % verwendet wurde. Dann wird der Benutzer darauf hingewiesen, die Dämpfung gegebenenfalls härter einzustellen.

In vorteilhaften Weiterbildungen wird nach Erhalt eines Steuerbefehls wenigstens eine Statusinformation akustisch mittels der Akustikeinrichtung und/oder optisch mittels einer Anzeigeeinrichtung und/oder über eine Vibrations- oder Rütteleinrichtung ausgegeben.

Besonders bevorzugt umfasst die Fahrradkomponente eine Fahrwerksteuerung und insbesondere wenigstens eine Dämpfereinrichtung.

In bevorzugten Ausgestaltungen ist mittels der Akustikeinrichtung eine Grundeinstellung wie "Komfort", "Race", "Rennen", "Tour", "Downhill", "Bergab", "Uphill", "Berghoch", "Lockout", "Blockiert" oder dergleichen mehr für wenigstens eine Fahrt einstellbar. Auch weitere unterschiedliche Grundeinstellungen können eingestellt werden. Eine derartige Grundeinstellung kann für eine Fahrt oder auch für mehrere Fahrten gelten. Will der Benutzer beispielsweise eine Feierabendtour mit seinem Mountainbike oder seinem E-Bike fahren, sind andere Einstellungen sinnvoll, als wenn der Benutzer eine Tour durch das Gelände oder eine Downhill-Fahrt machen will. Über eine Sprachsteuerung ist die Änderung schnell erledigt

In allen Ausgestaltungen ist es auch möglich und bevorzugt, dass mit der Akustikeinrichtung generell zeitweise oder dauerhaft Geräusche aufgenommen und in Geräuschsignale umgewandelt werden, wobei die Geräuschsignale ausgewertet werden, um beispielsweise einen Wegtyp oder einen Typ von Gelände zu erkennen. So kann beispielsweise an der Art der Geräusche erkannt werden, ob der Fahrer über eine glatt asphaltierte Straße oder durch ein matschiges Gelände oder über eine Schotterstraße fährt. Ein derartige Erkennung eines Geländetyps kann eingesetzt werden, um gegebenenfalls automatisch entsprechende Dämpfereinstellungen zu aktivieren. Möglich ist es auch, dass die Erkennung des Geländetyps eingesetzt wird, um dem Benutzer akustisch oder optisch Vorschläge für bestimmte Einstellungen zu machen. Das kann sinnvoll sein, wenn der Benutzer selber bestimmen will oder aber keine Aktoren zur automatischen Einstellung vorhanden sind.

Die aufgenommenen und in Geräuschsignale umgewandelten Geräusche können statt zur Geländeerkennung oder zusätzlich dazu auch für eine Erkennung von Schäden an einer Fahrradkomponente verwendet werden. Eine Schadenserkennung ist vorteilhaft. Wenn schadhafte oder der Wartung bedürftige Fahrradkomponenten andere Arten von Geräuschen und/oder andere Signalpegel produzieren als voll funktionsfähige, kann ein Wartungshinweis ausgegeben werden oder eine Schadenserkennung durchgeführt werden, wenn entsprechende Abweichungen der Ist-Abgabe von der Sollgabe von Geräuschen erkannt werden. Es kann eine Erkennung erfolgen und der Benutzer auf einen entsprechenden Schaden oder eine veränderte Eigenschaft hingewiesen werden.

Eine weitere erfindungsgemäße Fahrradbaugruppe für ein wenigstens teilweise muskelbetriebenes Fahrrad mit wenigstens einer Stoßdämpfereinrichtung und wenigstens einer Steuereinrichtung weist als Teil der Stoßdämpfereinrichtung einer steuerbare Dämpfereinrichtung und/oder steuerbare Federeinheit auf. Über die Steuereinrichtung kann die Dämpfung und Federung der Stoßdämpfereinrichtung eingestellt werden. Dabei ist eine Akustikeinrichtung zur Aufnahme von Geräuschen vorgesehen, welche in Steuerbefehle umgewandelt zur Steuerung der Steuereinrichtung einsetzbar sind. Eine derartige Akustikeinrichtung umfasst insbesondere eine akustische Empfangseinrichtung und vorzugsweise eine akustische Ausgabeeinrichtung. Vorzugsweise ist die Akustikeinrichtung zur Ausgabe von Geräuschen geeignet und ausgebildet.

Die Steuereinrichtung ist insbesondere dazu ausgebildet und eingerichtet, einen aus einem Geräuschsignal abgeleiteten Steuerbefehl auszuführen, wenn eine Betätigungseinrichtung in einem zugeordneten Zeitfenster betätigt wird und einen aus einem Geräuschsignal abgeleiteten Steuerbefehl ohne Bestätigung durch eine Betätigungseinrichtung (vorzugsweise genau nur dann) auszuführen, wenn der aus einem Geräuschsignal abgeleiteten Steuerbefehl nur zur Ausgabe von Informationen dient.

Ein erfindungsgemäßes Zweirad wie ein insbesondere wenigstens teilweise muskelgetriebenes Fahrrad oder E-Bike umfasst insbesondere wenigstens einen Rahmen und vorzugsweise wenigstens ein Vorderrad und insbesondere wenigstens ein Hinterrad und wenigstens eine Fahrradbaugruppe mit wenigstens einer Fahrradkomponente, deren Betriebszustand im Betrieb veränderlich oder veränderbar ist. Es ist wenigstens eine Akustikeinrichtung mit insbesondere wenigstens einem Schallwandler umfasst, um über die Steuereinrichtung gesteuert Informationen über den Betriebszustand der Fahrradkomponente mittels der Akustikeinrichtung auszugeben und/oder um mit der Akustikeinrichtung Geräusche zu erfassen und in Geräuschsignale umzuwandeln und zur Steuerung zu verwenden.

Auch das erfindungsgemäße Zweirad oder Fahrrad hat viele Vorteile.

Ein erfindungsgemäßes Verfahren dient zum Betreiben einer Fahrradbaugruppe oder eines wenigstens teilweise muskelbetriebenen Fahrrads, wobei eine Steuereinrichtung und wenigstens eine Fahrradkomponente umfasst sind, deren Betriebszustand im Betrieb veränderlich oder veränderbar ist. Über die Steuereinrichtung werden gesteuert Informationen über den Betriebszustand der Fahrradkomponente mittels einer Akustikeinrichtung ausgegeben und/oder es werden mit der Akustikeinrichtung Geräusche erfasst und in Geräuschsignale umgewandelt und zur Steuerung verwendet.

Ein aus einem Geräuschsignal abgeleiteter Steuerbefehl wird insbesondere dann ausgeführt, wenn in einem zugeordneten Zeitfenster eine Betätigungseinrichtung betätigt wird und ein aus einem Geräuschsignal abgeleiteter Steuerbefehl wird ohne Bestätigung durch eine Betätigungseinrichtung (insbesondere genau nur dann) ausgeführt, wenn der aus einem Geräuschsignal abgeleitete Steuerbefehl nur zur Ausgabe von Informationen dient.Auch das erfindungsgemäße Verfahren ist sehr vorteilhaft. In bevorzugten Weiterbildungen werden Verfahrensschritte durchgeführt, wie sie zuvor beschrieben wurden.

In allen Ausgestaltungen stellt die Erfindung vorzugsweise eine Sprachsteuerung für ein Fahrrad oder eine Fahrwerksteuerung oder wenigstens einer Fahrradkomponente zur Verfügung. Die Steuerung über Geräusche und insbesondere eine Sprachsteuerung ist vorzugsweise in allen Fällen auch ausschaltbar. Vorzugsweise erfolgt eine bidirektionale Steuerung, sodass Sprachbefehle eingegeben werden können und eine Sprachausgabe erfolgt. Möglich ist alternativ oder zusätzlich auch eine anderweitige Signalausgabe und/oder Signaleingabe über Geräusche, Licht, Vibration etc.

Eine derartige Geräuschsteuerung und Sprachsteuerung ermöglicht eine einfachere Bedienung eines Fahrrads oder einer Fahrradkomponente. Auch wenn der Fahrer beispielsweise müde ist.

Besonders vorteilhaft ist die Erfindung bei dem Einsatz an Mountainbikes oder Rennrädern oder E-Bikes. Bei einem Mountainbike kann beispielsweise eine Dämpfereinrichtung sprachlich gesteuert werden. Auch Statusabfragen der Dämpfereinrichtung und/oder der Gangschaltung sind möglich. Die Erfindung eignet sich nicht nur für reine Fahrräder, sondern kann auch an Zwei- oder Mehrrädern eingesetzt werden, die wenigstens teilweise muskelbetrieben sind und/oder eine Elektrounterstützung aufweisen.

Der Benutzer kann beispielsweise beim Beginn einer Tour einen Streckentyp ansagen, worauf hin entsprechende Einstellungen vorgenommen werden.

Es ist eine Abfrage von Zustandsinformationen über einzelne Fahrradkomponenten möglich, wobei die Statusinformationen insbesondere über eine Sprachausgabe ausgegeben werden.

Vorzugsweise erfolgt ein Feedback, wenn ein Sprachbefehl geäußert wird. Bei kritischen Sprachbefehlen oder wenn ein Sprachbefehl nicht genau erkannt oder zugeordnet werden kann, kann die Ausführung eines entsprechenden Sprachbefehls verweigert werden. Es ist möglich, dass eine Bestätigung nach Sprachbefehlen oder Ankündigung von Sprachbefehlen beispielsweise über mechanische Taster oder dergleichen erforderlich ist. Einen derartigen mechanischen Taster oder Schalter können Benutzer z. B. vom Lenker aus betätigen, ohne die Hand - von der sicheren Position weg - bewegen zu müssen. Der Lenker muss nicht losgelassen werden und der Blick kann auf der Fahrbahn oder dem Trail verbleiben, was entscheidende Vorteile hat. Auch muss der Blick nicht auf den Fahrradcomputer oder dergleichen fokussiert und wieder zurück auf den Weg fokussiert werden, was durch die nicht benötigten Fokussierungsvorgänge auch wertvolle Zeit im Gelände spart, die die Sicherheit erhöht.

Die Erfindung ermöglicht es, aktiv Fehler zu melden wie zum Beispiel einen Luftdruckverlust oder die Warnung vor einem heißen Dämpfer oder einem Durchschlag.

Möglich ist es auch, ein Ablaufprogramm bei einem Setup zur Verfügung zu stellen, wobei der Benutzer sprachgesteuert aufgefordert wird, entsprechende Schritte und Einstellungen vorzunehmen.

Die Erfindung eignet sich für unterschiedlichste Fahrräder. Wird eine Dämpfereinrichtung eingesetzt, so können konventionelle Dämpfer eingesetzt werden. Es können auch Dämpfer mit einem magnetorheologischen Fluid als Dämpfungsmedium eingesetzt werden.

Zur Steuerung einzelner Komponenten können entsprechende Aktoren für Drehknöpfe und dergleichen vorgesehen sein, um die Sprachbefehle aktiv umzusetzen.

Weitere Vorteile und Merkmale der vorliegenden Erfindung ergeben sich durch das Ausführungsbeispiel, welches im Folgenden mit Bezug auf die beiliegenden Figuren erläutert wird.

In den Figuren zeigen:
- Fig. 1: eine schematische Ansicht eines mit einer erfindungsgemäßen Fahrradkomponente ausgerüsteten Fahrrads;
- Fig. 2: eine schematische Ansicht der Steuerungsstruktur des Fahrrads nach Fig. 1;
- Fig. 2a: eine stark schematische Ansicht des zeitlichen Ablaufs einer Amplitude eines Sprachbefehls;
- Fig. 2b: eine stark schematische Ansicht des Höhenprofils zweier Fahrradtouren;
- Fig. 3a: eine schematische Ansicht einer Federgabel des Fahrrads nach Fig. 1; und
- Fig. 3b: eine schematische geschnittene Ansicht eines Stoßdämpfers des Fahrrads nach Fig. 1.

Mit Bezug auf die beiliegenden Figuren wird im Folgenden ein Ausführungsbeispiel eines mit mehreren Fahrradbaugruppen 10 ausgerüsteten Fahrrads 200 erläutert. Die Fahrradbaugruppen 10 weisen insgesamt eine gemeinsame Steuereinrichtung 60 auf. Möglich ist es auch, dass jede Fahrradbaugruppe 10 jeweils eine eigene Steuereinrichtung umfasst.

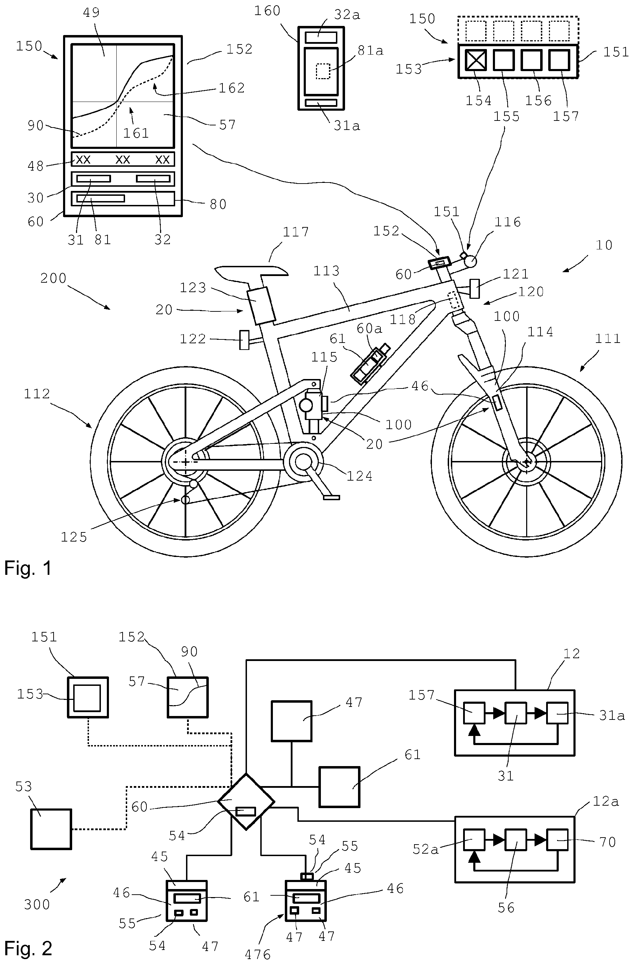

Fig. 1 zeigt eine schematische Darstellung eines Fahrrades 200, welches hier als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung 125 dient zur Wahl des Übersetzungsverhältnisses. Weiterhin weist das Fahrrad 200 eine Lenkeinrichtung 116 mit einem Lenker auf. Weiterhin ist ein Sattel 117 vorgesehen, der über eine höhenverstellbare Sattelstütze 123 hier automatisch oder manuell verstellbar ist. Das Fahrrad 200 kann über ein Vorderlicht 121 und ein Rücklicht 122 verfügen.

Das Fahrrad 200 verfügt hier über (wenigstens) zwei Stoßdämpfer 100, nämlich eine Federgabel 114, an der das Vorderrad 111 aufgenommen ist, und den Hinterraddämpfer 115 zwischen dem Rahmen und dem Hinterrad 112. Möglich ist auch ein Stoßdämpfer an der Sattelstütze. Die Stoßdämpfer 100 and dem Vorderrad und dem Hinterrad bilden zusammen mit der Steuereinrichtung 60 eine Fahrwerksteuerung 300.

Möglich ist es auch, dass das Fahrrad 200 als Rennrad ausgeführt ist und über keine Stoßdämpfer verfügt. Eine zu steuernde Einrichtung in Form einer Fahrradkomponente 20 kann dann z. B. eine Leistungsmessung oder die Gangschaltung oder eine eventuell vorhandene Lichtanlage sein. Bei einem Mountainbike können z. B. zusätzlich oder stattdessen die Stoßdämpfer 100 (vorn und/oder hinten) gesteuert werden.

Eine zentrale Steuereinrichtung 60 ist vorgesehen und ist hier am Lenker 116 z. B. im Fahrradcomputer untergebracht. Die Steuereinrichtung 60 kann auch zusammen mit einer Batterieeinheit 61 in einem trinkflaschenartigen Behälter vorgesehen und an dem Unterrohr angeordnet werden, wo sonst eine Trinkflasche angeordnet ist, kann aber auch im Rahmen vorgesehen werden. Möglich ist es auch, dass die Batterieeinheit 61 als Akkupack am Rahmen vorgesehen ist. Die Batterieeinheit 61 dient zur allgemeinen Stromversorgung und auch zur Versorgung eines eventuell vorhandenen elektrischen Hilfsantriebs 124, der zur Tretunterstützung dient, aber gegebenenfalls auch ein selbsttätiges Fahren ermöglicht. Die Steuereinrichtung 60 kann fest montiert oder auch demontierbar und austauschbar sein. Die Steuereinrichtung 60 kann z. B. austauschbar sein, wie z. B. Akkus an E-Bikes.

Die zentrale Steuereinrichtung 60 dient als Fahrwerksteuerung 300 und steuert hier sowohl die Federgabel 114 als auch den Hinterradstoßdämpfer 115 jeweils separat und hier insbesondere synchron. Die Steuerung der Stoßdämpfer 100 und weiterer Fahrradbaugruppen 10 und einzelner Fahrradkomponenten 20 kann in Abhängigkeit verschiedenster Parameter erfolgen und erfolgt auch anhand von sensorischen Daten. Gegebenenfalls kann auch die Länge bzw. Höhe der Sattelstütze 117 eingestellt werden und/oder es können auch die Feder- und/oder Dämpfungseigenschaften der Sattelstütze 117 eingestellt werden. Es ist möglich, dass mit der zentralen Steuereinrichtung 60 auch die Schaltung zum Einstellen verschiedener Übersetzungen gesteuert werden kann. Zur Erfassung einer Winkellage kann ein Winkelsensor 118 vorgesehen sein, der in Längs- und/oder Querrichtung eine Winkellage des Fahrrades 200 detektiert.

Zusätzlich weist hier jeder Stoßdämpfer 100 wenigstens eine Steuereinrichtung 46 an einer austauschbar vorgesehenen Elektronikeinheit auf. Die Elektronikeinheiten können jeweils separate Batterieeinheiten aufweisen. Bevorzugt ist aber eine Energieversorgung durch die zentrale Batterieeinheit 61 oder die Unterstützung oder der Betrieb durch einen Dynamo oder dgl. Möglich ist die Unterstützung auch durch Piezzoelemente, die durch die bei der Fahrt auftretenden Vibrationen elektrische Energie generieren, welche gespeichert werden kann.

Die Fahrwerksteuerung 300 und die zentrale Steuereinrichtung 60 werden über Bedieneinrichtungen 150 bedient. Es sind zwei Bedieneinrichtungen 150 vorgesehen, nämlich eine Betätigungseinrichtung 151 und eine Einstelleinrichtung 152. Die Betätigungseinrichtung 151 weist mechanische Eingabeeinheiten 153 an den seitlichen Enden oder in der Nähe der seitlichen Enden des Lenkers 116 auf. Die Einstelleinrichtung 152 kann als Fahrradcomputer ausgeführt sein und ebenfalls am Lenker 116 positioniert werden. Der Fahrradcomputer enthält vorzugsweise die (zentrale) Steuereinrichtung 60.

Möglich ist es aber auch, dass ein Smartphone 160, oder ein Tablett oder dergleichen als Einstelleinrichtung 152 eingesetzt wird und beispielsweise in der Tasche oder in dem Rucksack des Benutzers aufbewahrt wird, wenn keine Veränderung der Einstellungen vorgenommen wird. An dem Smartphone sind Schallwandler 31a und 32a zur akustischen Ein- und Ausgabe und ein Prozessor 81a zur lokalen Verarbeitung vorgesehen. Die Erkennung und Verarbeitung von Sprachsignalen kann alternativ oder ergänzend auch an einer zugeordneten Bedieneinrichtung 150 erfolgen.

Die Betätigungseinrichtung 151 umfasst hier drei mechanische Eingabeeinheiten als Bedienelemente 154, 155, 156 zur Bedienung des Stoßdämpfers 100. Es ist möglich, dass für die Federgabel 114 in der Nähe eines Endes des Lenkers 116 und insbesondere innen am oder benachbart zum Griff eine Betätigungseinrichtung 151 angeordnet ist. Bevorzugt ist, dass in der Nähe des anderen Endes des Lenkers und vorzugsweise dort innen am oder benachbart zum Griff eine entsprechende weitere Betätigungseinrichtung 151 für den Hinterradstoßdämpfer 115 vorgesehen ist. Möglich ist es auch, dass beide Stoßdämpfer mit einer Betätigungseinrichtung 151 synchron gesteuert werden. Möglich ist es auch, dass an einem seitlichen Ende des Lenkers 116 eine Betätigungseinrichtung mit beispielsweise sechs unterschiedlichen Bedienelementen zur Einstellung beider Stoßdämpfer 100 angeordnet ist.

Die Betätigungseinrichtung 151 ist erheblich robuster und widerstandsfähiger ausgeführt als die Bedieneinrichtung 152 und wird hier fest an dem Lenker 116 anmontiert. Die einzelnen als Druckschalter oder Taster ausgeführten Bedienelemente 154 bis 156 weisen vorzugsweise jeweils Schutz gemäß IP54 oder besser IP67 nach DIN EN 60529 auf. Es liegt ein Schutz gegen Stöße von mindestens IK06 gemäß DIN EN 622622 vor. Damit sind die Bedienelemente 154 bis 156 im normalen Betrieb ausreichend geschützt, sodass eine Beschädigung der Bedienelemente im Betrieb auch bei normalen Stößen oder dergleichen nicht erfolgt. Außerdem sorgen die robusten Bedienelemente 154 bis 156 für eine zuverlässige Bedienung auch bei Downhillfahrten oder dergleichen.

Die Einstelleinrichtung 152 hingegen, die beispielsweise am Lenker angeklipst wird, bietet erheblich mehr und/oder übersichtlichere Einstellmöglichkeiten und kann dazu eingesetzt werden, eine angezeigte Dämpferkennlinie in wenigstens zwei oder mehr Bereichen 161, 162 etc. zu verändern, um die gewünschten Dämpfereigenschaften einzustellen.

Die Einstelleinrichtung 152 weist ein Display bzw. eine Anzeige 49 auf und kann auch Daten 48 ausgeben, die beispielsweise die Dämpfereinstellungen betreffen oder aber Daten über die aktuelle Fahrgeschwindigkeit etc. enthalten. Die Einstelleinrichtung 152 kann auch das Smartphone sein. Neben oder anstelle der Veränderung der Dämpfung kann über die Einstelleinrichtungen 150 und 152 auch wenigstens eine Federeigenschaft oder die Charakteristik der Federung verändert werden. Dabei kann insbesondere die Federhärte beim Ein- und oder Ausfedern beeinflusst werden. Außerdem kann gegebenenfalls die Ruhelage eingestellt werden. Beispielsweise kann ein Absenken der Federgabel 114 bei (steilen) Bergfahrten vorgenommen werden, wodurch der Neigungswinkel des Fahrrads 200 verringert wird.

Hier im Ausführungsbeispiel ist die Einstelleinrichtung 152 mit der der Steuereinrichtung 60 ausgerüstet oder als eine solche ausgeführt. Die Steuereinrichtung 60 enthält wenigstens eine Akustikeinrichtung 30 mit jeweils wenigstens einem Schallwandler 31, 32. Hier umfasst die Steuereinrichtung 60 eine Akustikeinrichtung 30 mit zwei Schallwandlern 31, 32. Der Schallwandler 31 dient als Aufnahmeeinrichtung und insbesondere Mikrofon und der Schallwandler 32 als Schallausgabeeinrichtung und insbesondere Lautsprecher.

Die Steuereinrichtung 60 umfasst hier eine Recheneinheit 80 mit einem Prozessor 81. Der Schallwandler 31 nimmt einen Sprachbefehl 85 des Fahrers auf und wandelt die akustischen Signale in elektrische Signale um, die in dem Schallwandler 31 selbst oder in der Recheneinheit 80 digitalisiert werden. Eine dem Prozessor zugeordnete Spracherkennungsroutine analysiert die Geräuschsignale des Sprachbefehls und erkennt einen Steuerbefehl.

Der Steuerbefehl wird dann von der Steuereinrichtung 60 ausgeführt. In einer bevorzugten Variante kann der Benutzer z. B. die Stellung des Lockouts abfragen oder den Gang, in dem sich die Gangschaltung befindet. Als Antwort erhält der Benutzer eine Sprachausgabe. Zusätzlich kann die Information auch am Display 49 angezeigt werden.

Das Display 49 ist insbesondere als grafische Bedien- und Ausgabeeinheit oder Touchscreen 57 ausgeführt.

Die Einstelleinrichtung 152 kann auch als Fahrradcomputer dienen und Informationen über die aktuelle Geschwindigkeit, sowie über die Durchschnittsgeschwindigkeit und/oder die Tage-, Tour, Runden- und Gesamtkilometer anzeigen. Die Informationen können als Sprachausgabe ausgegeben werden. Möglich ist auch die Anzeige und/oder sprachliche Ausgabe der aktuellen Position, der momentanen Höhe der gefahrenen Strecke sowie des Streckenprofils und auch eine mögliche Reichweite unter den aktuellen Dämpfungsbedingungen und/oder elektrischen Antriebsbedingungen.

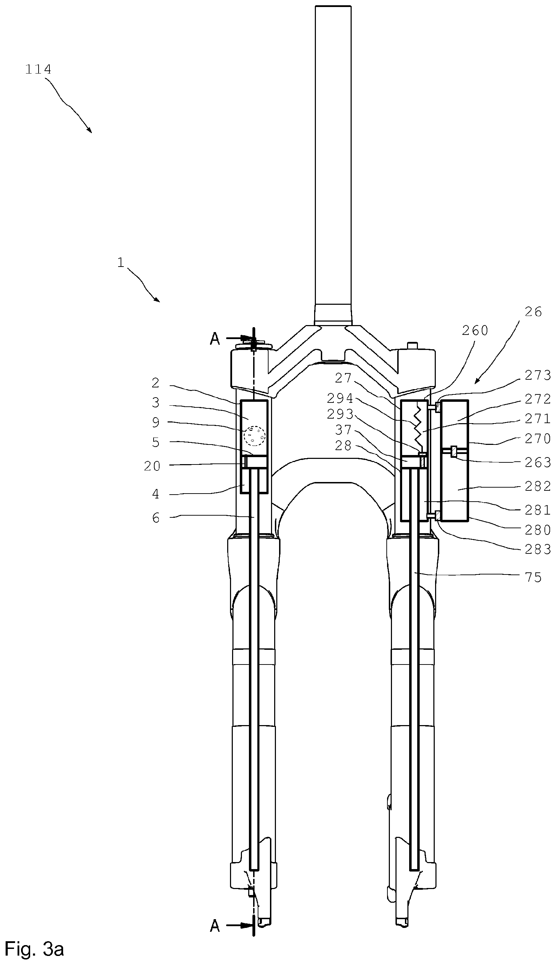

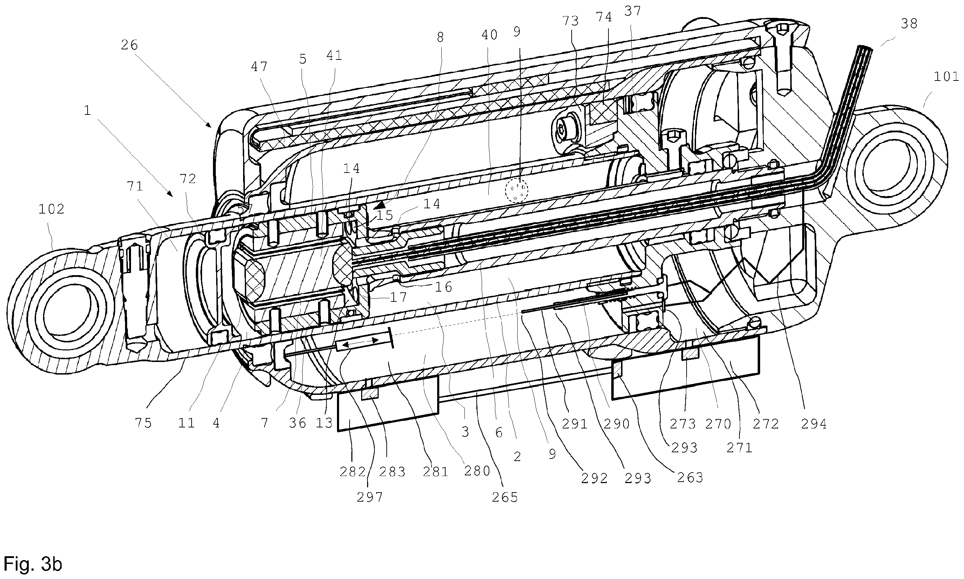

Über Sprachbefehle kann die zentrale Steuereinrichtung 60 die hier als Federgabel 114 ausgebildete Dämpfereinrichtung und auch den Hinterraddämpfer 115 beeinflussen und/oder Statusinformationen ausgeben. Die Einstellung der Dämpfereinrichtung 100 durch die Steuereinrichtung 60 wird mit Bezug zu den Figuren 3a und 3b näher erläutert.

Die Steuereinrichtung der Fahrradbaugruppe 10 bzw. des Fahrrads 200 ist dazu ausgebildet und eingerichtet, ein mit der Akustikeinrichtung erfasstes Geräuschsignal in einen Steuerbefehl umzuwandeln und auszuführen, wenn eine Betätigungseinrichtung 151 in einem zugeordneten Zeitfenster betätigt wird und ein mit der Akustikeinrichtung erfasstes Geräuschsignal in einen Steuerbefehl umzuwandeln und ohne Bestätigung durch eine Betätigungseinrichtung 151 (vorzugsweise genau nur dann) auszuführen, wenn das mit der Akustikeinrichtung erfasste und in einen Steuerbefehl umgewandelte Geräuschsignal nur zur Ausgabe von Informationen dient.

Die Steuereinrichtung ist dazu ausgebildet und eingerichtet, einen akustischen oder sprachlichen Steuerbefehl grundsätzlich nur auszuführen, wenn eine Betätigungseinrichtung in einem zugeordneten Zeitfenster betätigt wird und einen akustischen oder sprachlichen Steuerbefehl ohne Bestätigung durch eine Betätigungseinrichtung nur genau dann auszuführen, wenn der Steuerbefehl nur zur Ausgabe von Informationen dient (oder unkritisch für die Sicherheit ist).

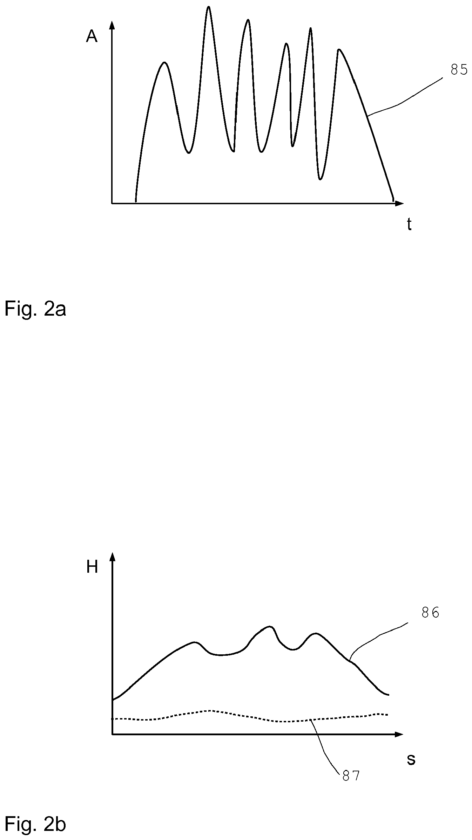

Fig. 2 zeigt eine schematische Darstellung der Fahrwerksteuerung 300 und der Kommunikationsverbindungen einiger beteiligter Komponenten. Die zentrale Steuereinrichtung 60 kann drahtgebunden oder drahtlos mit den einzelnen Fahrradkomponenten verbunden sein. Beispielsweise kann die Steuereinrichtung 60 über WLAN, Bluetooth, ANT+, GPRS, UMTS, LTE oder sonstige Übertragungsstandards lokal mit den anderen Fahrradkomponenten 20 verbunden sein. Die Verbindung der Steuereinrichtung zu den Fahrradkomponenten 20 erfolgt regelmäßig nicht über ein öffentliches Mobilfunknetz. Gegebenenfalls kann die Steuereinrichtung 60 über die gepunktet dargestellte Verbindung mit dem Internet 53 drahtlos verbunden sein, um Daten zum Beispiel in der Cloud oder dergleichen zu sichern. Für den Betrieb der Sprachsteuerung ist keine Internetverbindung nötig. Für eine drahtlose Verbindung zur Auswertung von Sprachbefehlen sind die beteiligten Einheiten weniger als vorzugsweise 5m oder 2m voneinander entfernt.

Die Steuereinrichtung 60 ist mit der Batterieeinheit 61 verbunden. Weiterhin kann die Steuereinrichtung 60 mit einer Sensoreinrichtung 47 oder mit mehreren Sensoren verbunden sein. Wenigstens zeitweise sind die Bedieneinrichtungen 150, nämlich die Betätigungseinrichtung 151 und die Einstelleinrichtung 152 drahtgebunden oder drahtlos mit der Steuereinrichtung 60 gekoppelt. Die Betätigungseinrichtung 151 ist vorzugsweise drahtgebunden an die Steuereinrichtung gekoppelt, kann aber auch drahtlos angebunden sein und über eine separate Batterie wie eine Knopfzelle oder dergleichen verfügen.

Die robust aufgebaute Betätigungseinrichtung 151 verfügt über wenigstens eine mechanische Eingabeeinheit 153 in Form eines Schalters oder dergleichen, um darüber einen Umstellbefehl an die Steuereinrichtung 60 zur Umschaltung wenigstens einer Dämpfer- und/oder Federeigenschaft auszugeben. Das kann beispielsweise die Aktivierung eines Lockouts oder die Aktivierung einer Wippunterdrückung oder die Verstellung der Dämpferhärte und/oder der Federhärte sein. Vorzugsweise ist für jede dieser Eigenschaften ein separater Bedienknopf oder dergleichen vorgesehen. Es ist aber auch möglich, dass eine einzelne mechanische Eingabeeinheit 153 zum Umschalten der einzelnen Möglichkeiten verwendet wird. Die mechanische Eingabeeinheit 153 oder eine mechanische Eingabeeinheit kann zur Veränderung der Federungseigenschaften dienen. Beispielsweise kann die Federgabel abgesenkt und der Hinterraddämpfer entsprechend angepasst werden.

Eine der mechanischen Eingabeeinheiten 153, z. B. die mechanische Eingabeeinheit 157, wird vorzugsweise eingesetzt, um einen Sprachbefehl quittieren oder ankündigen zu können. Das ist vorteilhaft, damit sichergestellt wird, das nur der jeweilige Fahrer die Einstellungen an den Komponenten seines Fahrrads ändert und nicht etwa der Fahrer neben oder hinter ihm. Zum Ankündigen betätigt der Fahrer den Taster 157 und spricht unmittelbar danach seinen Sprachbefehl. Zum Quittieren spricht er erst seinen Sprachbefehl und quittiert den Befehl unmittelbar danach durch Betätigen des Tasters 157. Durch die Ankündigung oder Bestätigung/Quittierung wird der Sprachbefehl akzeptiert und ausgeführt. Als weitere Schutzmaßnahme kann eingestellt werden, dass der Sprecher mit einer einstellbaren Genauigkeit erkannt werden muss (z. B. Genauigkeit >50% oder >75% oder >90%). Damit wird die Ausführung unerwünschter Sprachbefehle zuverlässig verhindert, auch wenn der Fahrer in einem Pulk fährt und mehrere Fahrer ein solches System haben.

Die Einstelleinrichtung 152 verfügt hier über eine grafische Bedieneinheit wie einen berührungsempfindlichen Bildschirm und kann unter anderen auf dem Display 49 die aktuelle Dämpferkennlinie 90 darstellen. Durch beispielsweise Berühren und Ziehen der Dämpferkennlinie an einzelnen Punkten kann die Dämpferkennlinie grundsätzlich beliebig seitlich oder in der Höhe verschoben werden. Vorzugsweise werden die einzelnen Punkte linear verbunden. Möglich ist auch eine dynamische Verbindung der einzelnen Punkte über Splines, sodass eine abgerundete Dämpferkennlinie vorliegt.

Die Steuereinrichtung 60 ist über Netzwerkschnittstellen 54 oder Funknetzschnittstellen 55 mit Steuereinrichtungen 46 der Stoßdämpfer 100 am Vorderrad und am Hinterrad verbunden. Die möglicherweise an jedem Stoßdämpfer 100 vorgesehene Steuereinrichtung 46 sorgt für die lokale Steuerung und kann jeweils eine Batterie aufweisen oder aber mit der zentralen Batterieeinheit 61 verbunden sein. Bevorzugt ist es, dass die Steuerung beider Stoßdämpfer über die Steuereinrichtung 60 erfolgt.

Vorzugsweise ist jedem Stoßdämpfer 100 wenigstens eine Sensoreinrichtung 47 zugeordnet, um Relativbewegungen zwischen den Komponenten 101 und 102 zu erfassen und insbesondere eine Relativposition der Komponenten 101 und 102 relativ zueinander zu bestimmen. Die Sensoreinrichtung 47 kann als Wegsensor ausgebildet sein oder einen solchen umfassen. Anhand der in der Speichereinrichtung 45 abgelegten Dämpferkennlinie 90 des Stoßdämpfers 100 wird nach Ermittlung eines Kennwerts für die Relativgeschwindigkeit die zugehörige Dämpfungskraft und eine passende Federkraft eingestellt. Eine passende Federkraft kann über das Gewicht des Fahrers ermittelt werden. Beispielsweise kann durch automatische Ermittlung der SAG-Position nach dem Aufsetzen eines Fahrers das Gewicht des Fahrers abgeleitet werden. Aus dem Einfederungsweg beim Aufsetzen des Fahrers auf das Fahrrad kann auf einen geeigneten Luftdruck in der Fluidfeder bzw. Gasfeder geschlossen werden, der dann automatisch sofort oder im Laufe des Betriebs eingestellt oder angenähert wird.

Die Steuereinrichtung 60 dient hier auch zur Steuerung des Fahrwerks im laufenden Betrieb. Eine zusätzliche Funktion ist die Reaktion auf Sprachbefehle und die Sprachausgabe.

In Figur 2 ist der Steuerkreislauf 12 schematisch dargestellt, der in der Speichereinrichtung 45 abgelegt ist und in der Steuereinrichtung 60 hinterlegt oder einprogrammiert ist. Der Steuerkreislauf 12 wird im Betrieb periodisch und insbesondere kontinuierlich periodisch oder auf Anforderung durchgeführt. Periodisch werden die vorhandenen Schallwandler 31 und 31a abgefragt, wenn der Taster 157 betätigt wurde, um bei Ankündigung eines Sprachbefehls diesen auszuwerten. Wird die Steuereinrichtung im Bestätigungsmodus betrieben, so wird kontinuierlich zugehört, eine Sprachauswertung durchgeführt und ein Sprachbefehl ausgeführt, wenn der Taster 157 unmittelbar danach gedrückt wird.

Über einen weiteren Steuerkreislauf 12a werden die Dämpfereinrichtungen 1 gesteuert. Im Schritt 52a wird mit den Sensoren 47 eine aktuelle Relativbewegung bzw. Relativgeschwindigkeit der ersten Komponente 101 zur zweiten Komponente 102 erfasst. Aus den Werten des Sensors 47 oder der Sensoren wird im Schritt 52a ein Kennwert abgeleitet, der repräsentativ für die aktuelle Relativgeschwindigkeit ist. Anschließend wird im Schritt 56 aus dem aktuellen bzw. ermittelten Kennwert unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke bzw. Stromstärke abgeleitet, mit welcher die einzustellende Dämpfungskraft wenigstens näherungsweise erreicht wird. Das Maß kann die Feldstärke selbst sein oder aber z. B. die Stromstärke angeben, mit welcher die einzustellende Dämpfungskraft wenigstens etwa erreicht wird.

Im darauf folgenden Schritt 70 wird die aktuell einzustellende Feldstärke erzeugt oder die entsprechende Stromstärke an die elektrische Spuleneinrichtung 11 als Felderzeugungseinrichtung angelegt, sodass innerhalb eines einzelnen Zyklus bzw. einer Zeitperiode des Steuerkreislaufes 12a die Dämpfungskraft erzeugt wird, die bei der gewählten oder vorbestimmten Dämpferkennlinie zu der aktuellen Relativgeschwindigkeit der ersten Komponente zu der zweiten Komponente vorgesehen ist. Anschließend startet der nächste Zyklus und es wird wieder Schritt 52a durchgeführt. In jedem Zyklus oder in bestimmten zeitlichen Abständen oder bei bestimmten Ereignissen wird die Position oder die Federkraft der Federeinrichtung 26 überprüft. Dazu wird bei der Fluidfeder 260 (vgl. Fig. 3a und 3b) die Stärke der Federkraft der Positivkammer 270 und die Stärke der Federkraft der Negativkammer 280 überprüft oder ermittelt. Wird eine härtere Fluidfeder 261 gewünscht, kann beispielsweise die zweite Positivkammer 272 abgeschaltet werden, sodass die Fluidfeder 260 einen steileren Verlauf der Federkraft erhält. Oder es wird das Volumen der Negativkammer 280 verändert oder es wird eine Position 292 der Ausgleichseinrichtung 290 verändert.

Die Fig. 2a zeigt eine stark schematische Ansicht der Amplitude eines Schallsignals 85 wie eines Sprachbefehls über der Zeit. Über eine Analyse des zeitlichen Verlaufs wird die tatsächliche Sprache in einen Steuerbefehl umgewandelt.

Fig. 2b zeigt eine stark schematische Ansicht von zwei Höhenprofilen zweier unterschiedlicher Fahrradtouren 86, 87.

Während die Tour 87 nur relativ wenige und geringe Steigungen aufweist, führt die Tour 86 über steile Anstiege und Abfahrten. Je nachdem, welche Art von Tour ein Fahrer plant, kann er zu Begin einen entsprechenden Sprachbefehl äußern, sodass die Steuerungseinrichtung die unterschiedlichen Fahrradkomponenten entsprechend (vor-)einstellt.

Fig. 3a zeigt in einer stark schematischen Ansicht eine Federgabel 114, die für das Vorderrad 111 Anwendung findet und Fig. 3b zeigt den Hinterraddämpfer 115, die im Folgenden gemeinsam beschrieben werden.

Die Federgabel 114 weist einen Stoßdämpfer 100 auf. Der Stoßdämpfer 100 umfasst eine Dämpfereinrichtung 1 in einem Bein der Federgabel und eine Federeinrichtung in dem anderen Bein der Federgabel. In anderen Ausgestaltungen können die Dämpfereinrichtung 1 und die Federeinrichtung 26 auch in einem Bein gemeinsam angeordnet sein.

Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu federn und zu dämpfen.

Die Dämpfereinrichtung 1 umfasst eine erste Dämpferkammer 3 und eine zweite Dämpferkammer 4 in einem gemeinsamen Dämpfergehäuse 2. Die beiden Dämpferkammer 3 und 4 sind voneinander durch den Dämpferkolben bzw. Dämpfungskolben 5 getrennt, in oder an dem ein magnetorheologisches Dämpfungsventil 8 einen Dämpfungskanal 20 aufweist, durch den das magnetorheologische Dämpfungsfluid 9 (MRF) strömt. Während das Dämpfergehäuse 2 an dem oberen Teil der Federgabel 114 und somit dem Rahmen 113 befestigt ist, ist der Dämpferkolben 5 über die Kolbenstange 6 mit dem unteren Ausfallende verbunden.

In dem anderen Federbein der Federgabel ist hier die Federeinrichtung 26 angeordnet, die hier eine als Fluidfeder 261 ausgebildete Federeinheit 260 umfasst. Die Federeinrichtung weist ein Gehäuse auf, in welchem der mit der Kolbenstange 75 verbundene Federungskolben 37 eine Positivkammer 270 von einer Negativkammer 280 trennt. Die Positivkammer 270 bildet eine Positivfeder und die Negativkammer 280 bildet eine Negativfeder, deren Federkraft in der Ruheposition meist geringer ist, aber bei der die Federkraft der der Positivfeder entgegengesetzt ist. Dadurch wird ein gutes Ansprechverhalten erreicht, da auch bei kleinen Stößen die Fluidfeder 261 reagiert. Die Fluidfeder 261 ist mit einem Fluid und hier mit Gas und vorzugsweise Luft gefüllt.

Die Positivfeder umfasst hier zwei Teilkammern 271 und 272, die durch ein Steuerventil 273 voneinander bedarfsweise getrennt oder miteinander verbunden werden können. Die Negativfeder umfasst hier zwei Teilkammern 281 und 282, die durch ein Steuerventil 283 voneinander bedarfsweise getrennt oder miteinander verbunden werden können.

Die Teilkammer 272 der Positivkammer 270 und die Teilkammer 282 der Negativkammer 280 können über das Steuerventil 263 miteinander verbunden werden. Dadurch wird es mit den Steuerventilen 263, 273 und 283 möglich, an jeder beliebigen Federposition einen Druckausgleich zwischen der Positivkammer und der Negativkammer vorzunehmen, wodurch die jeweilige Charakteristik der Fluidfeder 261 geändert wird. Die Steuerventile 263, 273 und 283 dienen dabei als Aktoren, welche durch die Steuereinrichtung 60 gesteuert betätigt werden. Die Aktivierung kann manuell oder über Sprachbefehle erfolgen. Statusabfragen und Einstellungen können über Sprachbefehle angefordert werden.

An dem Fahrrad kann die Ruhelage frei eingestellt werden und auch ein Absenken einer Federgabel beispielsweise bei Bergfahrten erreicht werden. Das geht z. B. auch über einen Sprachbefehl "Absenken" oder "Gabel absenken". Nach z. B. Quittierung des Sprachbefehls über einen mechanischen Taster, wird die Gabel abgesenkt.

Bei einem Hinterradstoßdämpfer kann ein gegebenenfalls vorhandenes Zusatzvolumen in einer Teilkammer über einen Sprachbefehl weggeschaltet werden und somit die Federung am Hinterrad für eine Bergauffahrt härter eingestellt werden. Es ist möglich, dass nur eines der Steuerventile 263, 273 und 283 vorgesehen ist. Beispielsweise kann nur das Steuerventil 273 (oder 283) vorgesehen sein, sodass durch Öffnen bzw. Schließen des Steuerventils 273 (bzw. 283) das Volumen der Positivkammer 270 (Negativkammer 280) und somit die Federcharakteristik der Federeinheit 260 verändert wird.

Es ist auch möglich, dass die Federgabel 114 nur ein Steuerventil 293 im Federungskolben 37 aufweist, welches über ein Kabel bzw. eine Steuerleitung 294 mit der Steuereinrichtung 60 verbunden ist. Durch das Öffnen des Steuerventils 293 kann ein Gastaustausch an jeder beliebigen axialen Position des Federungskolbens 37 ermöglicht werden. Ein Druckausgleich an einer geeigneten Stelle verändert die Ruhelage und führt z. B. zu einem Absenken oder zu einer Überführung in die Normallage, wenn die Federgabel abgesenkt war.

Durch geeignete Steuerung der Steuerventile kann auch das Druckniveau in der Positiv- und/oder Negativkammer beeinflusst werden.

Fig. 3b zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu dämpfen.

In dem Dämpfergehäuse 2 ist eine Dämpfungskolbeneinheit 40 vorgesehen, die einen Dämpfungskolben 5 mit einem Dämpfungsventil 8 und eine damit verbundene Kolbenstange 6 umfasst. In dem Dämpfungskolben 5 ist das magnetorheologische Dämpfungsventil 8 vorgesehen, welches hier eine Felderzeugungseinrichtung und insbesondere eine elektrische Spule 11 umfasst, um eine entsprechende Feldstärke zu erzeugen. Zur Stromversorgung und/oder Datenübertragung dient ein Kabel 38. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle. Dadurch wird eine effektive Beeinflussung des sich in den Dämpfungskanälen befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich hier ein magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle, die am anderen Ende in den Sammelraum bzw. in die Sammelräume münden. Dort sammelt sich nach dem Austritt aus den Dämpfungskanälen das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, das der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 280 der Federeinrichtung 26 umgeben. Dadurch wird ein besonders kompakter Aufbau ermöglicht.

Der Stoßdämpfer 100 umfasst eine Ausgleichseinrichtung 290, welche einen Druckausgleich zwischen der Positivkammer 270 und der Negativkammer 280 ermöglicht. Die Position des Druckausgleichs ist einstellbar. Dazu kann die Ausgleichseinrichtung 290 z. B. einen teleskopierbaren Ausgleichsstößel 291 aufweisen, der mehr oder weniger aus dem Federungskolben 37 ausfahrbar ist. Das Aus- und Einfahren des Ausgleichsstößels kann insbesondere mittelbar über einen Sprachbefehl erfolgen. In der Regel wird der Fahrer nicht den Sprachbefehl ausgeben "Stößel ausfahren". Möglich ist aber der Sprachbefehl "Federung weicher" oder "Dämpfer weicher" oder "Dämpfer hinten weicher" dergleichen, der oder die mittelbar zu einer Veränderung der Position des Ausgleichsstößels 291 führt oder führen kann.

Durch ein Ausfahren erreicht der ausfahrbare Ausgleichsstößel 291 früher (oder später) einen Anschlag am Ende der Negativkammer 280. Die Ausgleichseinrichtung 290 kann über ein elektrisches Kabel 294 mit der Steuerungseinrichtung 60 verbunden sein. Wenn der Ausgleichsstößel 291 anstößt, öffnet er eine Fluidöffnung daran, sodass ein Gasausgleich und somit ein Druckausgleich zwischen der Positivkammer 270 und der Negativkammer 280 erfolgt. Beim Ausfedern schließt die Ausgleichseinrichtung 290 wieder automatisch. Je nach Position des Ausgleichs werden unterschiedliche Druckverhältnisse an der Fluidfeder 261 eingestellt, die das Fahrwerk entsprechend beeinflussen. Möglich ist es auch, dass am Ende der Negativkammer 280 ein verstellbarer oder verfahrbarer Anschlag für einen feststehenden Ausgleichsstößel 291 vorgesehen ist, um eine Variation der Federcharakteristik zu erzielen. Alternativ oder zusätzlich dazu kann ein längenverstellbarer Anschlag 297 vorgesehen sein, gegen den der Ausgleichsstößel 291 an einer einstellbaren und veränderbaren Position 292 bzw. 296 anschlägt. Wenn der Ausgleichsstößel 291 anschlägt, öffnet der Ausgleichsstößel 291 das Steuerventil 293 bzw. bildet eine Strömungsöffnung, durch welche ein Druckausgleich zwischen Positiv- und Negativkammer erfolgen kann.

Fig. 3b zeigt eine Stellung 292 mit ausgefahrenem Ausgleichsstößel 291. Der Ausgleichsstößel 291 kann auch eingefahren werden, sodass sich eine andere Position 296 ergibt, bei der die Ausgleichseinrichtung 290 öffnet. Der Ausgleichsstößel 291 ist vorzugsweise mit einer Feder beaufschlagt.

Weiterhin kann auch ein elektrisch steuerbares und z. B. über das elektrische Kabel 294 mit Energie versorgtes Ausgleichsventil 293 vorgesehen sein, um an geeigneten Positionen einen teilweisen oder vollständigen Druckausgleich zwischen der Positivkammer 270 und der Negativkammer 280 durchzuführen.

Weiterhin kann die Positivkammer 270 aus mehreren Teilkammern 271, 272 bestehen. Zu der Grundkammer als Teilkammer 271 kann bei Bedarf oder auf Wunsch die Teilkammer 272 zugeschaltet werden, um die Federhärte zu verändern und insbesondere zu verringern. Umgekehrt kann auch die Teilkammer 272 abgeschaltet und von der Teilkammer 271 getrennt werden, wenn die Federhärte verändert und insbesondere erhöht werden soll.

Analog dazu kann die Negativkammer 280 aus mehreren Teilkammern 281, 282 bestehen. Zu der ersten Teilkammer 281 kann bei Bedarf oder auf Wunsch die zweite Teilkammer 282 zugeschaltet werden. Entsprechend kann auch die Teilkammer 282 abgeschaltet und von der Teilkammer 281 getrennt werden. In einer weiteren Ausgestaltung umfasst die Positivkammer 270 Teilkammern 271 und 272 und die Negativkammer 280 Teilkammern 281 und 282. Die Ausgleichseinrichtung 290 umfasst in dieser Ausgestaltung Steuerventile 273, 283 und 263 und eine Verbindungsleitung 265, welche die Teilkammern 272 und 282 bedarfsweise miteinander verbindet.

Werden die drei Steuerventile 273, 283 und 263 z. B. in Folge eines Sprachbefehls geöffnet, so findet ein Druckausgleich zwischen der Positivkammer 270 und der Negativkammer 280 statt. Die Position 292 des Druckausgleichs ist dabei beliebig wählbar und unabhängig von einem Ausgleichsstößel 291. Deshalb muss bei einer solchen Ausgestaltung weder ein Ausgleichsstößel 291, noch ein Steuerventil 293 im Kolben 37, noch ein einstellbarer Anschlag 297 vorgesehen sein. Die Zu- und Abschaltung der Teilkammern kann in allen Fällen auch positionsabhängig beim Ein- oder Ausfedern erfolgen.

Der Federungskolben 37 ist am Ende des Dämpfergehäuses 2 vorgesehen. Daran angeordnet ist ein Halter 73, der einen Magneten 74 hält. Der Magnet 74 ist Teil eines Sensors 47. Der Sensor 47 umfasst ein Magnetpotentiometer, welches ein Signal erfasst, welches für die Position des Magneten 74 und damit des Federungskolbens 37 repräsentativ ist. Eine solches Potentiometer 47 erlaubt nicht nur die Bestimmung eines relativen Ortes, sondern erlaubt hier auch die absolute Feststellung des Ein- bzw. Ausfederungsstandes des Stoßdämpfers 100. Möglich ist auch der Einsatz eines Ultraschallsensors, um einen Abstand zu erfassen.

Die Erfindung ist vorteilhaft bei allen Arten von Fahrrädern und insbesondere an sportlichen Fahrrädern. Bei einem Mountainbike können beispielsweise beide Dämpfer (Federgabel und Hinterraddämpfer) und auch die Gangschaltung sprachlich gesteuert werden. Auch Statusabfragen der Dämpfereinrichtung und/oder der Gangschaltung und anderer Komponenten sind möglich, die durch Sprache ausgegeben werden. Eine Sprache für die Eingabe und Ausgabe wie z. B. deutsch, englisch, französisch, italienisch, spanisch, chinesisch, japanisch etc. kann gewählt werden.

Vorteilhaft ist die einfache Benutzung. Bei Beginn einer Tour kann der Benutzer eine Strecke wählen und die Steuerungseinrichtung 60 wählt automatisch geeignete Einstellungen. Dazu kann auch ein Abgleich mit dem Internet vorgenommen werden, um optimale Einstellungen zu finden.

Der Benutzer kann Zustandsinformationen über einzelne Fahrradkomponenten über Sprachbefehle abfragen, wobei die Statusinformationen insbesondere über eine Sprachausgabe ausgegeben werden.

Vorzugsweise erfolgt ein Feedback, wenn ein Sprachbefehl geäußert und akzeptiert wird. Bei kritischen Befehlen oder wenn ein Befehl nicht genau erkannt oder zugeordnet werden kann, kann die Ausführung eines entsprechenden Sprachbefehls verweigert werden und über andere Signale quittiert werden. Es ist bevorzugt, dass eine Bestätigung und/oder Ankündigung von Sprachbefehlen beispielsweise über mechanische Taster oder dergleichen erforderlich ist. Solche Taster oder Schalter können Benutzer z. B. direkt am Lenker betätigen.

Die Erfindung ermöglicht es auch, dass die Steuereinrichtung 60 aktiv Fehler meldet, wenn zum Beispiel der Dämpfer heiß wird oder ein Durchschlag droht.

Ein Ablaufprogramm kann bei einem Setup zur Verfügung gestellt werden. Dann wird der Benutzer z. B. nach dem Kauf sprachgesteuert aufgefordert, entsprechende Schritte und Einstellungen vorzunehmen und kann (muss aber nicht) ein Sprachtraining vorzunehmen.

**Bezugszeichenliste:**

| | | | |
|---|---|---|---|
| 1 | Dämpfereinrichtung | 85 | Sprachbefehl |
| 2 | Dämpfergehäuse | 86, 87 | Tour |
| 3, 4 | Dämpferkammer | 90 | Dämpferkennlinie |
| 5 | Dämpfungskolben | 100 | Stoßdämpfer |
| 6 | Kolbenstange | 101, 102 | Komponente |
| 7 | Dämpfungskanal | 111, 112 | Rad |
| 8 | Dämpfungsventil | 113 | Rahmen |
| 9 | MRF | 114 | Federgabel |
| 10 | Fahrradbaugruppe | 115 | Hinterraddämpfer |
| 11 | Spuleneinrichtung | 116 | Lenker |
| 12, 12a | Steuerkreislauf | 117 | Sattel |
| 14-16 | Öffnung | 118 | Winkelsensor |
| 17 | Einwegventil | 120 | Trageinrichtung |
| 20 | Fahrradkomponente | 121, 122 | Licht |
| 26 | Federeinrichtung | 123 | Sattelstütze |
| 30 | Akustikeinrichtung | 124 | Antriebsmotor |
| 31, 31a | Schallwandler, Mikrofon | 125 | Gangschaltung |
| | | 150 | Bedieneinrichtung |
| 32, 32a | Schallwandler, Lautsprecher | 151 | Betätigungseinrichtung |
| | | 152 | Einstelleinrichtung |
| 37 | Federungskolben | 153 | Eingabeeinheit |
| 38 | Kabel | 154-157 | Bedienelement |
| 40 | Dämpfungskolbeneinheit | 160 | Smartphone |
| 41 | Kern | 161-162 | Bereich |
| 45 | Speichereinrichtung | 200 | Zweirad |
| 46 | Steuereinrichtung | 260 | Federeinheit |
| 47 | Dämpfersensor, Sensor | 261 | Fluidfeder |
| 48 | Daten | 263 | Steuerventil |
| 49 | Display, Anzeige | 265 | Leitung |
| 52, 52a | Schritt | 270 | Positivkammer |
| 53 | Internet | 271, 272 | Teilkammer |
| 54, 55 | Schnittstelle | 273 | Steuerventil |
| 56 | Schritt | 280 | Negativkammer |
| 57 | Touchscreen, grafische Bedieneinheit | 281, 282 | Teilkammer |
| | | 283 | Steuerventil |
| 60 | Steuereinrichtung | 290 | Ausgleichseinrichtung |
| 61 | Batterieeinheit | 291 | Ausgleichsstößel |
| 70 | Schritt | 292 | Position |
| 71 | Ausgleichsraum | 293 | Ausgleichsventil |
| 72 | Ausgleichskolben | 294 | Kabel, Steuerleitung |
| 73 | Halter | 296 | Position |
| 74 | Magnet | 297 | Anschlag |
| 75 | Kolbenstange | 300 | Fahrwerksteuerung |
| 80 | Recheneinheit | | |
| 81, 81a | Prozessor | | |

## Patentansprüche

1. Fahrradbaugruppe (10) für ein wenigstens teilweise muskelbetriebenes Fahrrad (200) mit einer Steuereinrichtung (60) und wenigstens einer Fahrradkomponente (20), deren Betriebszustand im Betrieb veränderlich ist,
**dadurch gekennzeichnet,**
**dass** wenigstens eine Akustikeinrichtung (30) mit wenigstens einem Schallwandler (31, 32) umfasst ist, um über die Steuereinrichtung (60) gesteuert Informationen über den Betriebszustand der Fahrradkomponente (20) mittels der Akustikeinrichtung (30) auszugeben, und/oder um mit der Akustikeinrichtung (30) Geräusche zu erfassen und in Geräuschsignale umzuwandeln und zur Steuerung zu verwenden.

2. Fahrradbaugruppe (10) nach dem vorhergehenden Anspruch, wobei die Steuereinrichtung (60) wenigstens einen Prozessor (81) umfasst und dazu ausgebildet und eingerichtet ist, Geräuschsignale in Steuerbefehle umzuwandeln und einen Steuerbefehl auszuführen, wenn eine Betätigungseinrichtung (151) in einem zugeordneten Zeitfenster betätigt wird und einen Steuerbefehl ohne Bestätigung durch eine Betätigungseinrichtung (151) auszuführen, wenn der Steuerbefehl nur zur Ausgabe von Informationen dient.

3. Fahrradbaugruppe (10) nach einem der beiden vorhergehenden Ansprüche, wobei wenigstens eine Fahrradkomponente (20) aus einer Gruppe von Fahrradkomponenten umfasst ist, welche aktive und passive Fahrradkomponenten wie ein Vorderrad (111), ein Hinterrad (112), eine Dämpfereinrichtung (1) wie eine Dämpfereinrichtung (114) zur Dämpfung des Vorderrades und eine Dämpfereinrichtung (115) zur Dämpfung des Hinterrades, wenigstens einen Sensor (47) zur Erfassung wenigstens eines Zustandes einer Dämpfereinrichtung (1) oder einer anderen Komponente, ein Vorderlicht (121), ein Rücklicht (122), eine höhenverstellbare Sattelstütze (123), eine Gangschaltung (125), einen elektrischen Antriebsmotor (124), eine Batterieeinheit (61), eine Druckmesseinrichtung für einen Luftdruck in dem Vorderrad, eine Druckmesseinrichtung für einen Luftdruck in dem Hinterrad, eine Druckmesseinrichtung für einen Luftdruck, einen Geschwindigkeitssensor, einen Winkelsensor (118), einen Trittfrequenzsensor, einen Lagesensor, einen Leistungssensor und einen Höhensensor umfasst.

4. Fahrradbaugruppe (10) nach einem der vorhergehenden Ansprüche, wobei die Steuereinrichtung (60) dazu ausgebildet und eingerichtet ist, wenigstens eine vorbestimmte Anzahl von Sprachbefehlen zu erkennen und insbesondere dazu ausgebildet und eingerichtet ist, wenigstens einen Sprachbefehl in einen Steuerbefehl umzuwandeln und/oder wobei der Prozessor (81) eine Erkennungsroutine umfasst, um den Sprecher eines Sprachbefehls zu erkennen.

5. Fahrradbaugruppe (10) nach einem der vorhergehenden Ansprüche, wobei die Steuereinrichtung (60) dazu ausgebildet und eingerichtet ist, einen Steuerbefehl nur auszuführen, wenn der Sprecher eine ausreichende Berechtigung aufweist.

6. Fahrradbaugruppe (10) nach einem der vorhergehenden Ansprüche, wobei die Steuereinrichtung (60) einen Steuerbefehl über ein Bestätigungssignal quittiert.

7. Fahrradbaugruppe (10) nach einem der vorhergehenden Ansprüche, wobei die Steuereinrichtung (60) mit einem Steuerbefehl eine aktive Fahrradkomponente (1) steuert und/oder wobei die Fahrradkomponente (20) eine Fahrwerksteuerung (300) umfasst.

8. Fahrradbaugruppe (10) nach einem der vorhergehenden Ansprüche, wobei die Steuereinrichtung (60) dazu eingerichtet und ausgebildet ist, mittels der Akustikeinrichtung (30) Warnhinweise auszugeben, wenn eine Fahrradkomponente (20) wie zum Beispiel eine Dämpfereinrichtung (1) oder eine Bremse oder eine Bremsflanke eine vorbestimmte Temperatur übersteigt oder wenn der Luftdruck in einem Reifen sich ändert oder wenn ein Durchschlag einer Dämpfereinrichtung (1) droht oder erfolgt ist.

9. Fahrradbaugruppe (10) nach einem der vorhergehenden Ansprüche, wobei die Steuereinrichtung (10) dazu eingerichtet und ausgebildet ist, nach Erhalt eines Steuerbefehls wenigstens eine Statusinformation akustisch mittels der Akustikeinrichtung (30) und/oder optisch mittels einer Anzeigeeinrichtung (49) auszugeben und/oder mittels einer Vibrationseinrichtung auszugeben oder zu quittieren.

10. Fahrradbaugruppe (10) nach einem der vorhergehenden Ansprüche, wobei mittels der Akustikeinrichtung (30) eine Grundeinstellung wie "Comfort", "Race", "Tour", "Downhill", "Uphill" oder "Lockout" für wenigstens eine Fahrt einstellbar ist.

11. Fahrradbaugruppe (10) nach einem der vorhergehenden Ansprüche, wobei die Geräuschsignale ausgewertet werden, um einen Typ von Gelände und/oder Schäden an einer Fahrradkomponente (20) zu erkennen.

12. Fahrradbaugruppe (10) für ein wenigstens teilweise muskelbetriebenes Fahrrad (200) insbesondere nach einem der vorhergehenden Ansprüche mit wenigstens einer Stoßdämpfereinrichtung (100), wenigstens einer Steuereinrichtung (60) und mit wenigstens einer über die Steuereinrichtung (60) steuerbaren Dämpfereinrichtung (1) und/oder Federeinheit (260),
**dadurch gekennzeichnet,**
**dass** eine Akustikeinrichtung (30) zur Aufnahme von Geräuschen vorgesehen ist, welche in Steuerbefehle umgewandelt zur Steuerung der Steuereinrichtung (60) einsetzbar sind.

13. Fahrradbaugruppe (10) nach dem vorhergehenden Anspruch, wobei die Akustikeinrichtung (30) zur Ausgabe von Geräuschen geeignet und ausgebildet ist.

14. Zweirad wie Fahrrad (200) oder E-Bike mit wenigstens einem Rahmen (113), wenigstens einem Vorderrad (111) und wenigstens einem Hinterrad (112) und wenigstens einer Fahrradbaugruppe (10) nach einem der vorhergehenden Ansprüche.

15. Verfahren zum Betreiben einer Fahrradbaugruppe (10) oder eines wenigstens teilweise muskelbetriebenen Fahrrads (200) mit einer Steuereinrichtung (60) und wenigstens einer Fahrradkomponente (20), deren Betriebszustand im Betrieb veränderlich ist,
wobei über die Steuereinrichtung (60) gesteuert Informationen über den Betriebszustand der Fahrradkomponente (20) mittels der Akustikeinrichtung (30) ausgegeben werden und/oder wobei mit der Akustikeinrichtung (30) Geräusche erfasst und in Geräuschsignale umgewandelt werden und zur Steuerung verwendet werden.
